# EUROPÄISCHE PATENTSCHRIFT

(11) **EP 1 744 925 B1**
(45) Veröffentlichungstag und Bekanntmachung des Hinweises auf die Patenterteilung: **10.06.2009**
(21) Anmeldenummer: 05715896.6
(22) Anmeldetag: 10.03.2005
(51) Int. Cl.: B60K 11/02

(54) **KRAFTFAHRZEUG MIT EINEM FAHRWERK SOWIE VORDERACHSTRÄGER FÜR EIN KRAFTFAHRZEUG**
MOTOR VEHICLE COMPRISING A CHASSIS IN ADDITION TO A FRONT-AXLE SUPPORT FOR A MOTOR VEHICLE
VEHICULE AUTOMOBILE COMPRENANT UN CHASSIS ET SUPPORT DE PONT AVANT D'UN VEHICULE AUTOMOBILE

(30) Priorität: 06.04.2004 DE 102004016800
(43) Veröffentlichungstag der Anmeldung: 24.01.2007
(73) Patentinhaber: Dr. Ing. h.c. F. Porsche Aktiengesellschaft, 70435 Stuttgart (DE)
(72) Erfinder: SCHNEIDER, Klaus, 75233 Tiefenbronn (DE)
(86) Internationale Anmeldenummer: PCT/EP2005/002514
(87) Internationale Veröffentlichungsnummer: WO 2005/097535

(56) Entgegenhaltungen:
- EP-A- 0 656 270
- DE-A1- 4 032 433
- DE-A1- 4 040 378
- FR-A- 2 742 403

## Beschreibung

Die Erfindung betrifft ein Kraftfahrzeug mit einem Fahrwerk und einer daran befestigten wassergekühlten Brennkraftmaschine, welche als Heck- oder Mittelmotor ausgebildet ist, sowie mit einem Kühlsystem, bestehend aus kühlmittelführenden Rohren, mindestens einem Kühlerelement und einer Kühlmittelpumpe, mit deren Hilfe eine Zwangsströmung im Kühlkreislauf erzeugbar ist.

Kraftfahrzeuge mit wassergekühlten Motoren weisen ein Kühlleitungssystem auf, in dem mindestens ein Kühlerelement zur Abfuhr der Motorwärme angeordnet ist. Über eine Kühlmittelpumpe wird die vom Motor erzeugte Wärme über Kühlmittel führende Rohre dem Kühler zugeführt und das im Wärmeaustausch mit der Luft abgekühlte Kühlmittel über den Rücklauf bildende Kühlmittelrohre den im Motorgehäuse integrierten Kühlkanälen wieder zugeführt. Insbesondere bei Fahrzeuge mit Heck- oder Mittelmotor und im Bugteil angeordneten Kühlerelementen ist die Verlegung bzw. Befestigung von Kühlrohren am Kraftfahrzeug erforderlich.

Die gattungsgemäße DE 40 40 378 A1 beschreibt eine Kühleinrichtung für einen Flüssigkeitskreislauf eines Kraftfahrzeugs, wobei ein Kühlelement an einem Achsträger befestigt und an der Fahrzeugunterseite vom Fahrtwind angeströmt ist. Gemäß der DE 40 40 378 A1 ist der Flüssigkeitsbehälter der Kühleinrichtung an einem Motorträger befestigt, der einerseits mit dem Motor des Kraftfahrzeugs verbunden und andererseits über ein Motorlager an der Karosserie des Fahrzeugs oder an eben diesem Achsträger abgestützt ist.

Aufgabe der Erfindung ist es, die zum Kühlkreislauf gehörenden Kühlrohre so am Kraftfahrzeug zu befestigen, dass sie einerseits nicht durch sich bewegende Fahrwerkteile beschädigt werden können und andererseits leicht montierbar sind.

Die Aufgabe wird durch die im Anspruch 1 angegebenen Merkmale gelöst.

Dadurch, dass ein Teil des Kühlrohrsystems auf einem Achsträger des Kraftfahrzeuges befestigt ist, kann eine Vormontage diese Teile bereits beim Systemlieferanten für den Achsträger erfolgen. Diese vormontierte Baueinheit des Kühlrohrsystems kann gleichzeitig bereits auf Dichtheit geprüft werden, so dass nicht nur der Vormontageaufwand am Band, sondern auch der Nacharbeitungsaufwand reduzierbar ist.

Durch die in den Unteransprüchen aufgeführten Maßnahmen sind weitere vorteilhafte Ausgestaltungen und Weiterbildungen des Kraftfahrzeuges bzw. des Vorderachsträgers für ein Kraftfahrzeug möglich. Dadurch, dass ein Vor- und Rücklauf - Verteilerrohr für zwei im Bugteil des Kraftfahrzeuges angeordnete Kühlerelemente - in Fahrtrichtung gesehenvor einem auf dem Achsträger befestigten Lenkgetriebe angeordnet sind, führen lediglich zwei Rohre durch die oszillierenden Teile der Achsaufhängung, so dass mögliche Beschädigungen aufgrund sich bewegender Fahrwerksteile reduziert sind. Da die Vor- und Rücklauf- Verteilerrohre auf dem Vorderachsträger befestigt sind, kann der Verrohrungsaufwand reduziert werden, weil der Kühlmittel - Volumenstrom erst in der Nähe der Kühler abgezweigt wird.

Auf vorteilhafte Art und Weise sind am Achsträger Rohrschellen befestigt, in die auf einfache Art und Weise die Kühlrohre eingeklipst werden können.

Ein Ausführungsbeispiel der Erfindung ist in der nachfolgenden Beschreibung und Zeichnung näher erläutert.

Es zeigen:
- Fig. 1: die schematische Gesamtansicht eines Kühlsystems eines Kraftfahrzeuges,
- Fig. 2: einen Vorderachsträger eines Kraftfahrzeuges mit daran befestigten Kühlrohren und
- Fig. 3: eine zweite Ansicht des Achsträgers nach Fig. 2.

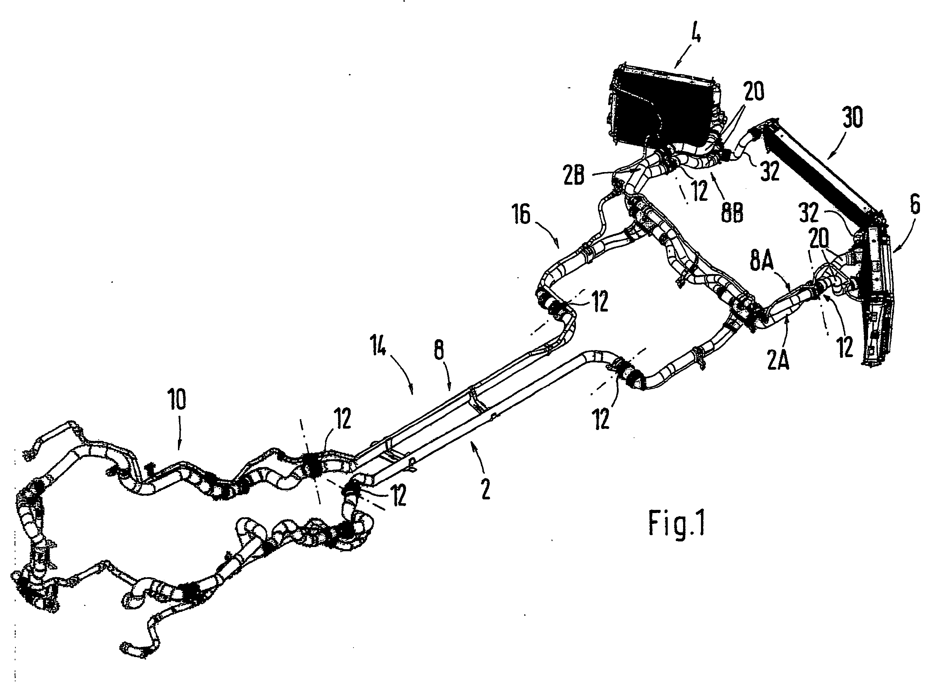

Das in Fig. 1 schematisch dargestellte Kühlrohrsystem für ein Kraftfahrzeug mit Heck- oder Mittelmotor, wie beispielsweise bei den von der Anmelderin hergestellten Sportwagen Porsche 911 oder Porsche Boxster vorgesehen, weist einen ersten Kühlrohrstrang 2 auf, der als Kühlmittelvorlauf von dem im Heck angeordneten wassergekühlten Motor über ein Verteilerrohr 2A und 2B zu zwei im Bug des Kraftfahrzeugs angeordneten Kühlerelementen 4 und 6 führt. Ein zweiter, als Rücklauf ausgebildeter Kühlrohrstrang 8 führt über zwei von den Kühlelementen 4 und 6 ausgehenden Verteilerrohren 8a und 8b zurück zum Motor und ist ebenfalls an den im Motor integrierten Kühlkanälen angeschlossen. Das Kühlrohrsystem ist aus mehreren Baugruppen zusammengesetzt, die mit Hilfe von Schnellkupplungen entsprechend verbunden sind. So besteht das Kühlrohrsystem von hinten, d. h. vom Motor aus gesehen, aus einer Hinterwagen - Baugruppe 10, die an der strichpunktiert dargestellten Linie über entsprechende Schnellkupplungen 12 mit einer mittleren Baugruppe, im folgenden als Tunnelrohr - Baugruppe 14 bezeichnet, verbunden ist. An diese Tunnelrohr - Baugruppe 14 schließt sich eine aus Vor- und Rücklauf bestehende Verteilerrohr - Baugruppe 16 an, die, wie später noch näher beschrieben, auf einem Vorderachsträger 18 des Kraftfahrzeuges befestigt ist. An die, den Vor- und Rücklauf bildenden Verteilerrohr - Baugruppe 16 sind Schläuche oder Rohrstücke 20 angeschlossen, die mit Vor- und Rücklaufanschlüssen der beiden Kühlerelemente 4 und 6 verbunden sind.

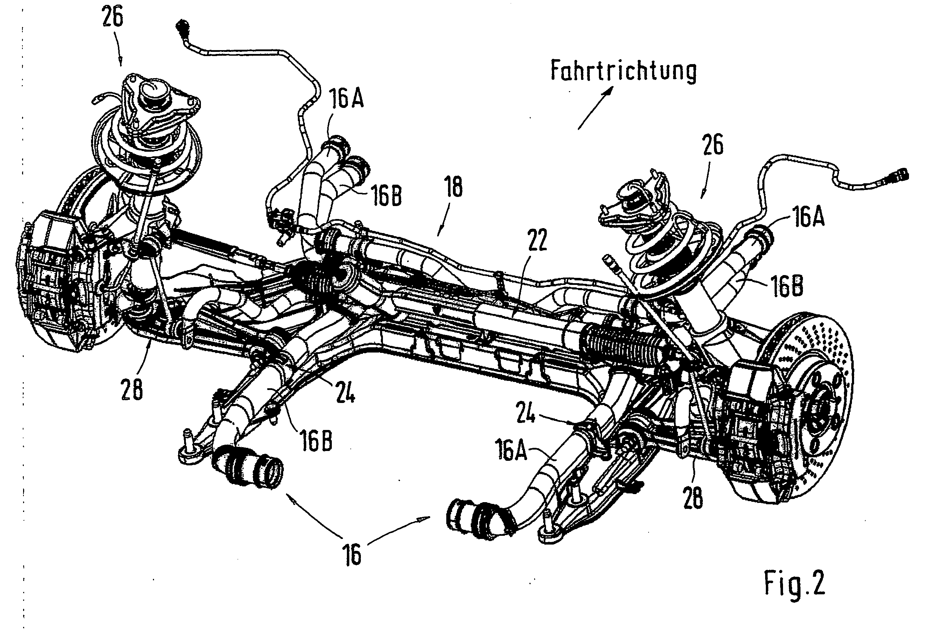

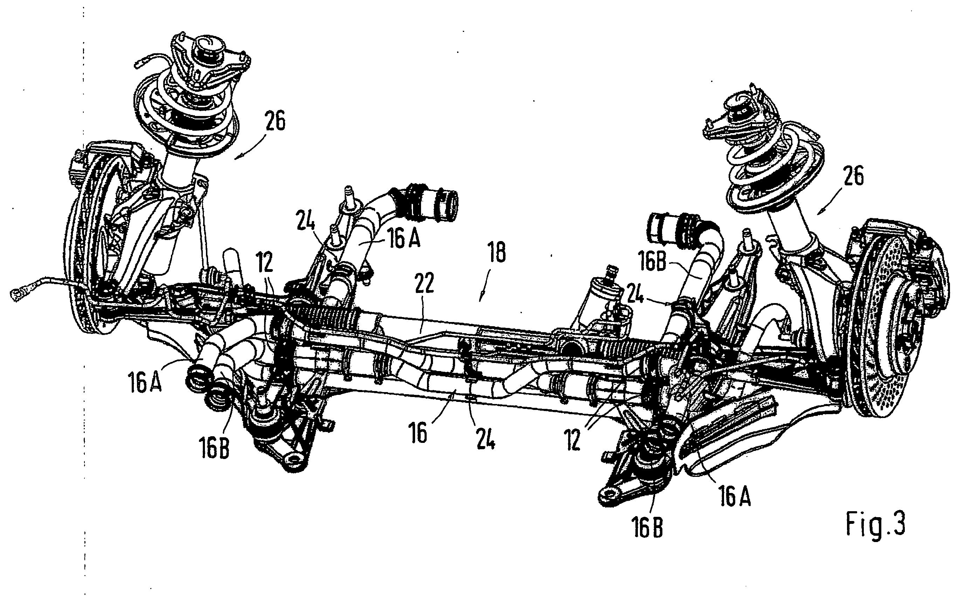

In Fig. 3 ist der Vorderachsträger 18 des Kraftfahrzeuges dargestellt, auf dem die Verteilerrohr - Baugruppe 16 vormontiert ist. Wie aus den Fig. 2 und 3 ersichtlich, ist das Vor- und Rücklaufrohr 16a und 16b durch ein auf der Vorderachse befestigtes Lenkgetriebe 22 hindurchgeführt und zweigt danach zu den beiden Kühlerelementen 4 und 6 ab. Die gesamte Verteilerrohr - Baugruppe 16 ist dabei mit Hilfe von Rohrschellen 24 am Vorderachsträger 18 befestigt. Die am Vorderachsträger 18 vorgesehene Radaufhängung besteht aus jeweils einem McPherson - Federbein 26. Die beiden Querlenker 28 sind dabei auf der einen Seite am Achsträger 18 und auf der anderen Seite am Federbein 26 befestigt.

Zur Steigerung der Kühlleistung ist zwischen dem linken und dem rechten Kühlerelement 4, 6 optional noch ein Mittelkühler 30 vorgesehen, der über entsprechende Schlauch- oder Rohrverbindungen 32 an das Vor- und Rücklaufrohr 16a und 16b der Verteilerrohr-Baugruppe 16 angeschlossen und damit in den Kühlkreislauf eingebunden ist. Wie aus Fig. 1 ersichtlich, erfolgt die Abzweigung der Schlauch- oder Rohrverbindungen 32 erst kurz vor dem Mittelkühler 30, um auch hier den Verrohrungsaufwand so gering wie möglich zu halten.

## Patentansprüche

1. Kraftfahrzeug mit einem Fahrwerk und einer daran befestigten wassergekühlten Brennkraftmaschine, welche als Heck- oder Mittelmotor ausgebildet ist, sowie mit einem Kühlsystem, bestehend aus Kühlmittel führenden Rohren, mindestens einem Kühlerelement und einer Kühlmittelpumpe, mit deren Hilfe eine Zwangsströmung im Kühlkreislauf erzeugbar ist, **dadurch gekennzeichnet, dass** das Kühlrohrsystem aus mehreren Baugruppen zusammengesetzt ist, welche mit Hilfe von Schnellkupplungen miteinander verbunden sind, wobei eine Hinterwagen-Baugruppe 10, und mit dieser verbunden eine mittlere Baugruppe vorgesehen sind, wobei ein Teil des Kühlrohrsystems (16), welcher sich an die mittlere Baugruppe anschließt, als Baugruppe auf einem Vorderachsträger (18) des Kraftfahrzeuges befestigt ist.

2. Kraftfahrzeug nach Anspruch 1, **dadurch gekennzeichnet, dass** eine Verteilerrohr - Baugruppe (16) jeweils ein Vor- und Rücklaufrohr (16a, 16b) aufweist, die zu zwei im Bug des Kraftfahrzeugs angeordneten Kühlerelementen (4, 6) abzweigen, wobei die Abzweigung - in Fahrtrichtung gesehen - vor einem auf dem Vorderachsträger (18) montierten Lenkgetriebe (22) vorgesehen ist.

3. Kraftfahrzeug nach Anspruch 1 oder 2, **dadurch gekennzeichnet, dass** am Vorderachsträger (18) Rohrschellen (24) vorgesehen sind, mit denen die Kühlrohre (16) am Vorderachsträger (18) befesfigt sind.

## Claims

1. Motor vehicle having a chassis and having a water-cooled internal combustion engine fastened to said chassis, which internal combustion engine is embodied as a rear-mounted or centrally-mounted engine, and having a cooling system which is composed of coolant-conducting pipes, at least one cooler element and a coolant pump and by means of which a forced flow can be generated in the cooling circuit, **characterized in that** the cooling pipe system is assembled from a plurality of assemblies which are connected to one another by means of quick-action couplings, with a rear-end assembly 10 and, connected to the latter, a central assembly being provided, with a part, which adjoins the central assembly, of the cooling pipe system (16) being fastened as an assembly to a front axle support (18) of the motor vehicle.

2. Motor vehicle according to Claim 1, **characterized in that** a distributing pipe assembly (16) has in each case one supply and return pipe (16a, 16b) which branch to two cooler elements (4, 6) arranged in the front end of the motor vehicle, with the branch being provided - as viewed in the direction of travel - in front of a steering gear (22) which is mounted on the front axle support (18).

3. Motor vehicle according to Claim 1 or 2, **characterized in that** pipe clamps (24) are provided on the front axle support (18), by means of which pipe clamps (24) the cooling pipes (16) are fastened to the front axle support (18).

## Revendications

1. Véhicule automobile comprenant un châssis et un moteur à combustion interne à refroidissement à eau fixé sur celui-ci, qui est réalisé sous forme de moteur arrière ou de moteur central, et comprenant également un système de refroidissement constitué de tubes conduisant du réfrigérant, d'au moins un élément de radiateur et d'une pompe à réfrigérant à l'aide de laquelle un écoulement forcé peut être produit dans le circuit de refroidissement, **caractérisé en ce que** le système de tubes de refroidissement est constitué de plusieurs modules qui sont connectés les uns aux autres à l'aide de raccords rapides, un module arrière de voiture 10, et, connecté à celui-ci, un module central, étant prévus, une partie du système de tubes de refroidissement (16) qui se raccorde au module central étant fixée en tant que module sur un support d'essieu avant (18) du véhicule automobile.

2. Véhicule automobile selon la revendication 1, **caractérisé en ce qu'**un module de tubes de distribution (16) présente à chaque fois un tube aller et un tube retour (16a, 16b) qui se ramifient vers deux éléments de radiateur (4, 6) disposés dans la partie avant du véhicule automobile, la ramification - vue dans la direction de conduite - étant située avant un mécanisme de direction (22) monté sur le support d'essieu avant (18).

3. Véhicule automobile selon la revendication 1 ou 2, **caractérisé en ce que** des colliers de serrage (24) sont prévus sur le support d'essieu avant (18), avec lesquels les tubes de refroidissement (16) sont fixés sur le support d'essieu avant (18).
